# EUROPÄISCHE PATENTANMELDUNG

(11) **EP 1 892 133 A2**
(43) Veröffentlichungstag der Anmeldung: **27.02.2008**
(21) Anmeldenummer: 07009393.5
(22) Anmeldetag: 10.05.2007
(51) Int. Cl.: B60J 3/02

(54) **Heckscheibenrollo mit rollgeformter Trageschiene**

(30) Priorität: 23.08.2006 DE 102006039443
(71) Anmelder: BOS GmbH & Co. KG, 73760 Ostfildern (DE)
(72) Erfinder: Starzmann, Michael, 73666 Hohengehren (DE); Walter, Herbert, 73061 Ebersbach (DE); Maier, Matthias, 73733 Esslingen (DE)
(74) Vertreter: Rüger, Barthelt & Abel Patentanwälte

(57) **Zusammenfassung**

Ein Hebelrollo weist Schwenk- oder Kniehebel auf, die dazu dienen, die Rollobahn im aufgespannten Zustand zu tragen. Diese Hebel sind an einer Trägerschiene schwenkbar gelagert, die durch Rollformen aus einem Blechband hergestellt ist. Aufgrund des Umformvorgangs entsteht an der Trägerschiene eine die Wickelwelle aufnehmende Nut sowie eine neben der Nut verlaufende Kammer. Die Trägerschiene erhält hierdurch die notwendige Biegesteifigkeit.

Außerdem ist der Zugstab, an dem die Rollobahn befestigt ist, durch Kugelstrahlen behandelt, um die beim Herstellungsprozess entstandenen Riefen zu beseitigen.

## Beschreibung

Aus der P 36 12 165 A1 ist ein Heckscheibenrollo bekannt, das mit Hilfe von Hebeln vor der Heckscheibe aufgespannt wird. Die Hebel sind steife gerade Schwenkhebel, die an einer Trägerschiene anscharniert sind.

Bei der Trägerschiene handelt es sich um ein Aluminiumstrangpressprofil, das eine Nut zur Aufnahme der Wickelwelle bzw. der Wickelwelle samt darauf befindlichen Rolloballens bildet. Neben dieser Nut, die U-förmig mit gerundetem Boden sich nach oben öffnet, sind zwei Hohlkammern vorgesehen, die der Aussteifung der Trägerschiene dienen. Neben der Nut bildet eine der Hohlkammern eine schräge Montagefläche, an der die Hebel anscharniert sind.

Das stranggepresste Profil der Trägerschiene stellt bei dem Rollo einen wesentlichen Kostenfaktor dar. Heckscheibenrollos, insbesondere in einfacher Ausführung mit Hebeln, werden zunehmend auch in der unteren Preisklasse der PKW's angeboten, womit es wichtig wird, die Kosten für das Rollo niedrig zu halten. Der finanzielle Aufwand für das Strangpressprofil der Trägerschiene ist hier kontraproduktiv.

Ausgehend hiervon ist es Aufgabe der Erfindung, ein neues Heckscheibenrollo zu schaffen, bei dem die Herstellungskosten deutlich gesenkt sind.

Diese Aufgabe wird erfindungsgemäß mit einem Heckscheibenrollo mit den Merkmalen des Anspruches 1 gelöst.

Das neue Heckscheibenrollo weist eine Trägerschiene auf, die aus einem rollgeformten Metallband als Endlosware hergestellt ist. Die Trägerschiene bildet eine Nut zur Aufnahme der Wickelwelle und daneben eine Hohlkammer, die ebenfalls über die Länge der Trägerschiene durchläuft. Auf der anderen Seite der Nut bildet die Trägerschiene einen frei auskragenden Flansch. Die Herstellung der Trägerschiene aus einem rollgeformten Metallband senkt die Herstellungskosten enorm, ohne dass die Stabilität darunter leidet. Ferner kann gegenüber der bekannten Trägerschiene aus einem Aluminiumstragpressprofil eine deutliche Gewichtsersparnis erzielt werden, was aus der Sicht der Automobilhersteller wichtig ist. Durch Anbringen von Ausstanzungen in nicht tragenden Bereichen kann das Gewicht weiter reduziert werden.

Die Begrenzungsfläche der Kammer neben der Nut dient gleichzeitig als Montagefläche für die Hebelanordnung.

Im Übrigen ist das Heckscheibenrollo konventionell aufgebaut in der Weise, dass es eine in der Nut drehbar gelagerte Wickelwelle aufweist, an der mit einer Kante die Rollobahn befestigt ist. Die andere freie Kante der Rollobahn ist mit einem Zugstab versehen. Zwischen der Trägerschiene und dem Zugstab erstreckt sich eine Hebelanordnung, die zumindest während der Ausfahrbewegung sämtliche Kräfte aufnimmt, die beim Ausfahren auftreten, wenn die Rollobahn unter einem gewünschten Winkel aufgespannt gehalten werden soll.

Das Material, aus dem das Blechband besteht, das der Trägerschiene zugrunde liegt, kann Aluminium oder Stahl sein.

Das Querschnittsprofil der Trägerschiene bildet zweckmäßigerweise eine ebene Bodenfläche, was die Montage der Trägerschiene innerhalb des Fahrzeugs erleichtert.

Günstige Platzverhältnisse ergeben sich, wenn die Kammer neben der Führungsnut dreieckförmig ist.

Die Nut selbst hat vorzugsweise einen rechteckigen Querschnitt, womit sich ein ebener Nutenboden ergibt. Dieser ebene Nutenboden erleichtert das Schließen der Kammer.

Vorteilhafterweise liegt eine freie Kante des ursprünglichen Blechbandes auf dem Boden der Nut auf. Hier bildet das Profil einen Flansch, der flächig auf dem Boden der Nut aufliegt, bzw. den Boden der Nut bildet. Bei einer anderen Ausführungsform kann der Flansch auch auf der Außenseite auf dem Boden der Schiene im Bereich der Nut zu liegen kommen.

Sehr steife Verhältnisse ergeben sich, wenn dieser Flansch mit der Trägerschiene im Bereich des Nutbodens stoffschlüssig oder formschlüssig verbunden ist. Eine stoffschlüssige Verbindung kann durch Schweißen, wie Punktschweißen, Löten oder Kleben erhalten werden. Eine formschlüssige Verbindung durch Nieten oder durch Toxen. Beim Toxen wird das Material verformt, wodurch das Material der einen Lage in eine Öffnung der anderen Lage eindringt. Die Verbindung kann eine druckknopfähnliche Gestalt haben, oder es können bandartige Laschen mit scharfen Kanten aus der einen Lage ausgestanzt und in die andere Lage eingepresst werden.

Eine weitere Verbesserung der Festigkeit ergibt sich, wenn die Trägerschienen auf der von der Kammer abliegenden Seite der Nut einen Flansch bildet. Der Flansch ist vorzugsweise eben.

Die Hebelanordnung kann, wie beim oben diskutierten Stand der Technik, von zwei an der Trägerschiene anscharnierten starren Hebeln gebildet sein oder aber von zwei Kniehebeln. Im ersteren Falle sind die Hebel gleitend mit dem Zugstab verbunden. Sie vollführen während der Schwenkbewegung beim Aufspannen der Rollobahn eine Gleitbewegung durch entsprechende Nuten in dem Zugstab. Im anderen Falle ist das freie Ende der Kniehebel drehgelenkig mit dem Zugstab verbunden.

Je nach dem Kantenverhältnis bei der ausgefahrenen Rollobahn können die Kniehebel im eingeknickten Zustand mit ihren Kniegelenken einander gegenüberstehen oder aber sie können einander ein Stück weit überdecken. Um dies zu erreichen sind die Schwenkachsen achsparallel zueinander, jedoch nicht rechtwinklig zu der Längsachse der Wickelwelle ausgerichtet.

Ein weiterer Aspekt der Erfindung besteht darin, ein Rollo zu schaffen, bei dem der Zugstab ein ansprechendes Äußeres aufweist.

Nach dem Stand der Technik werden Zugstäbe verwendet, die aus einem Aluminiumstrangpressprofil bestehen. Beim Strangpressen entstehen in Richtung parallel zum Austreiben des Materials verlaufende feine Riefen. Diese Riefen werden an dem fertigen Zugstab als unschön empfunden. Man ist deswegen bestrebt, diese Riefen, zumindest auf der Sichtseite, zu vermeiden. Hierzu wird bislang der Stab nach der Herstellung mit einem starken Beizmittel gebeizt. Dies lässt zwar die sichtbaren Riefen verschwinde, dafür wird eine verhältnismäßig raue Oberfläche erzeugt, was insbesondere dann zu Problemen führt, wenn innerhalb der Zugschiene irgendwelche gleitenden Teile vorgesehen sind.

Um diesem Problem abzuhelfen ist gemäß einem weiteren Aspekt der Erfindung der Zugstab, zumindest im Bereich der Sichtseite, kugelgestrahlt. Durch das Kugelstrahlen verschwinden die Riefen. Gleichzeitig tritt durch das Kugelstrahlen eine Oberflächenverfestigung und eine Glättung ein.

Da Kugelstrahlen ein gerichteter Vorgang ist, können Bereiche ausgespart werden, bei denen eine kugelgestrahlte Oberfläche nachteilig ist. Dies gilt möglicherweise wiederum für solche Flächen, an denen Gleitbewegungen auftreten. Hier ist es unter Umständen von Vorteil die herstellungbedingten Riefen beizubehalten und sie als Reservoir für Schmiermittel zu nutzen.

Im Übrigen sind Weiterbildungen der Erfindung Gegenstand von Unteransprüchen.

Die nachfolgende Figurenbeschreibung beschränkt sich auf die Erläuterung der wesentlichen Aspekte der Erfindung. Es ist klar, dass eine Reihe von Abwandlungen möglich sind. Kleinere, nicht beschriebene Details kann der Fachmann in der gewohnten Weise den Zeichnungen entnehmen, die insoweit die Figurenbeschreibung ergänzen.

In der Zeichnung ist ein Ausführungsbeispiel des Gegenstandes der Erfindung dargestellt. Es zeigen:
- Fig. 1: einen Ausschnitt aus einem Kraftfahrzeug in Verbindung mit einem aufgespannten erfindungsgemäßen Heckscheibenrollo.
- Fig. 2: eine Detailansicht des Heckscheibenrollos nach Fig. 1.

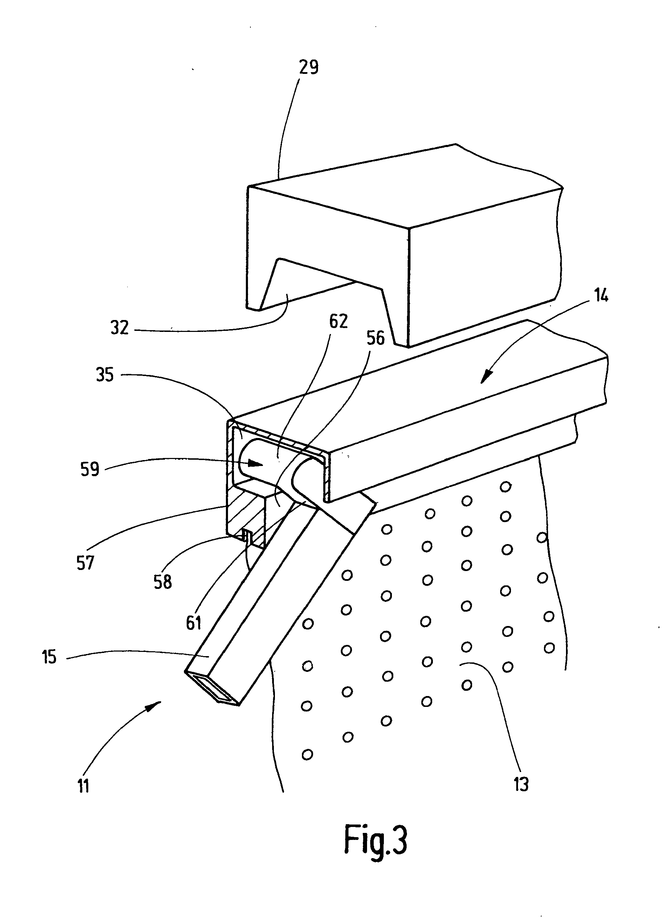

- Fig. 3: das Zusammenwirken der schwenkbaren Hebeln mit dem Zugstab, in einer vergrößerten perspektivischen Darstellung und
- Fig. 4: ein alternatives Ausführungsbeispiel des Heckscheibenrollos gemäß der Erfindung unter Verwendung von Kniehebeln.

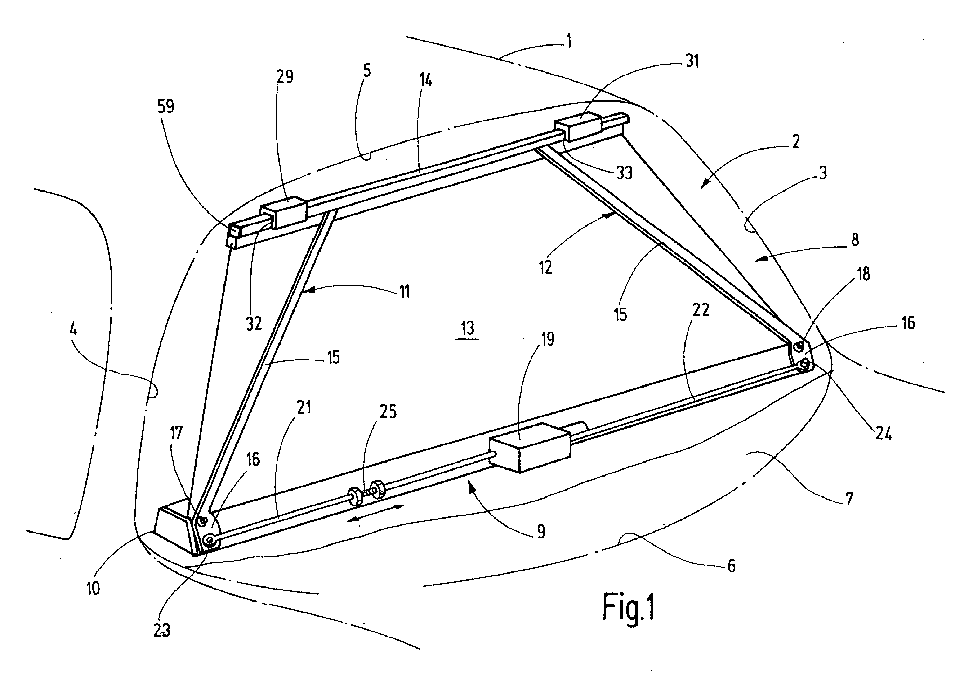

Fig. 1 zeigt mit strichpunktieren Linien die Außenumrisse eines Ausschnitts aus einer Kraftfahrzeugheckpartie 1 in einem Blick von der Außenseite her. Zu erkennen ist ein Heckfenster 2, das von zwei Fensterseitenkanten 3 und 4, einer Fensteroberkante oder Dachhinterkante 5 sowie einer Fensterunterkante 6 begrenzt ist. Im Fahrzeuginneren erstreckt sich, ausgehend von der Fensterunterkante, eine abgebrochen veranschaulichte Hutablage 7.

Ferner zeigt Fig. 1 neben der Innenseite des Heckfensters 2 ein ausgefahrenes Hebelrollo 8.

Zu dem Hebelrollo 8 gehört eine unterhalb der Hutablage 7 angeordnete Trägerschiene 9, an der zwei Schwenkhebel 11 und 12 anscharniert sind. Die Trägerschiene 9 ist beidends durch Endkappen 10 verschlossen.

Die Hebel 11 und 12 dienen dazu, eine Rollobahn 13 aufzuspannen, deren freie Kante an einem Zugstab 14 befestigt ist. Die Hebel 11 und 12 sind zweiarmige Hebel und setzen sich aus einem längeren Arm 15 sowie einem kurzen Arm 16 zusammen. Dort, wo die Arme 15 und 16 ineinander übergehen, sind die Schwenkhebel 11, 12 auf Lagerzapfen 17 und 18 drehbar gelagert. Die Lagerzapfen 17 und 18 sind in der Trägerschiene 9 verankert.

Zum Betätigen der Schwenkhebel 11, 12 ist ein Getriebemotor 19 vorhanden, der ebenfalls an der Trägerschiene 9 befestigt ist. Der Getriebemotor 19 treibt zwei Kuppelstangen 21 und 22 an, die mit den Armen 15 und 16 verbunden sind. Die Kuppelstange 21 ist bei 23 mit dem Arm 15 verbunden, während die Kuppelstange 22 bei 24 an dem Arm 16 angelenkt ist.

Der Getriebemotor 19 enthält in bekannter Weise ein Zahnrad, mit dem in dem Gehäuse des Getriebemotors 19 Zahnstangen kämmend in Eingriff stehen. Die Zahnstangen sind bezüglich des antreibenden Zahnrads diametral gegenüber angeordnet und mit den Kuppelstangen 21 und 22 zug- und druckfest verbunden.

Zwecks Zentrierung und Längenausgleich ist in der Kuppelstange 21 eine Gewindeeinrichtung 25 vorgesehen, um deren effektive Länge einstellen zu können.

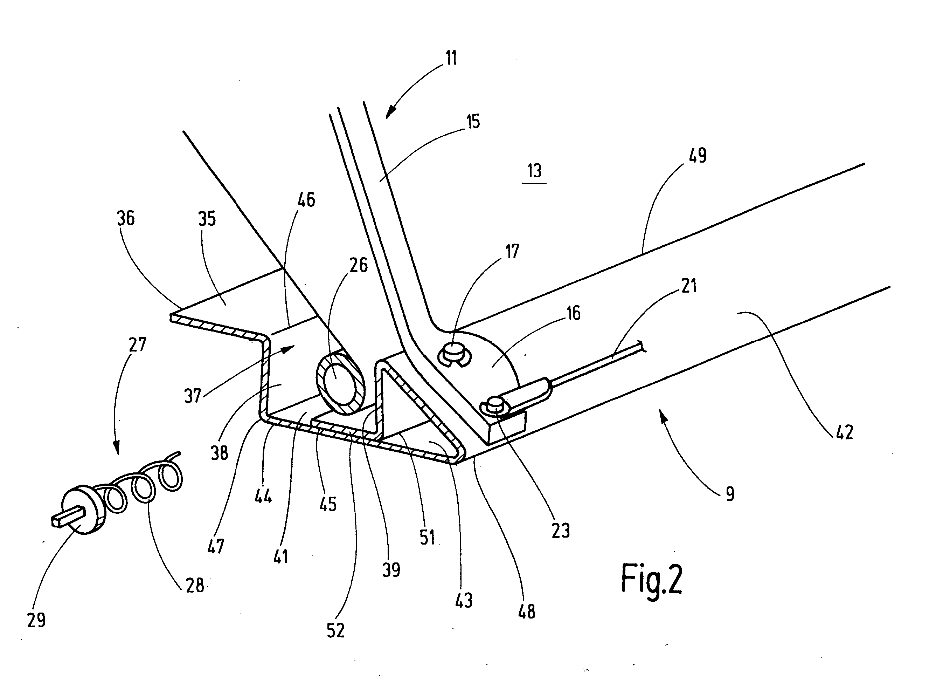

Wie die vergrößerte Detaildarstellung gemäß Fig. 2 erkennen lässt, ist in der Trägerschiene 9 eine Wickelwelle 26 drehbar gelagert, an der die Rollobahn 13 mit ihrer Unterkante befestigt ist. In der Wickelwelle 26 sitzt ein Federmotor 27, der von einer Schraubenzugfeder 28 gebildet ist. Die Schraubenzugfeder 28 ist mit dem innenliegenden Ende drehfest mit der rohrförmigen Wickelwelle 26 verbunden, während ihr außenliegendes Ende an einem Lagerstück 2 verankert ist. Das Lagerstück 29 ist drehfest mit der Endkappe 10 verbunden.

Die Scharnierbolzen 17 und 18 sind achsparallel zueinander und verlaufen rechtwinklig zu der Längsachse der Wickelwelle 26. Dadurch wird erreicht, dass die beiden Schwenkhebel 11, 12 in einer gemeinsamen oder in zueinander parallelen Ebene schwenken, die zu der Längsachse der Wickelwelle 26 parallel liegen. Diese Schwenkebenen sind an eine Näherungsebene angepasst, durch die der Verlauf der Heckscheibe angenähert ist.

Das insoweit beschriebene Hebelrollo arbeitet wie folgt:
Im eingefahrenen Zustand liegen die Schwenkhebel 11, 12 mit ihren Armen 15 parallel zu der Trägerschiene 9. Das Auszugsprofil 14, an dem die Rollobahn 13 befestigt ist, liegt unmittelbar auf der Hutablage bzw. den Rändern eines darin enthaltenen Schlitzes, durch den die Rollobahn 13 ausfährt. Die Rollobahn 13 ist zufolge der Wirkung des Federmotors 27 straff auf die Wickelwelle 26 aufgewickelt.

Durch in Gang setzen des Getriebemotors 19 mittels eines entsprechenden Steuerschalters, werden die beiden Kuppelstangen 21 und 22 in Richtung auf den mittig zwischen den Schwenkhebeln 11, 12 angeordneten Getriebemotor 19 gezogen. Dadurch werden die Schwenkhebel 11, 12 veranlasst, aus der Stellung, in der ihre Arme 15 parallel zur Trägerschiene 9 liegen, eine aufgerichtete Lage einzunehmen. Sie schwenken hierbei durch den Schlitz in der Hutablage 7 nach oben, etwa in die in Fig. 1 gezeigte Stellung, in der ihre Arme 15 etwa parallel zu den Seitenkanten der Rollobahn 13 liegen. Bei der Schwenkbewegung gleiten die Schwenkhebel 11, 12 längs der Zugschiene 14 und bewegen sich in Richtung auf die Fensteroberkante 5.

Während der Schwenkbewegung wird das Auszugsprofil 14 lediglich von den hinreichend knick- und biegesteifen Schwenkhebeln 11, 12 getragen.

Beim Erreichen der Endposition gelangt der Zugstab 14 in karroseriefest angebrachte Halter 29, 31, die hierzu entsprechende Ausnahmennuten 32 bzw. 33 aufweisen, die nach unten zeigen.

Zum Einfahren wird der Getriebemotor 19 mit umgekehrter Drehrichtung in Gang gesetzt, wodurch die Schwenkhebel 11, 12 veranlasst werden, in die Ruhestellung zurückzukehren, in der die Arme 15 parallel zu der Trägerschiene 9 liegen.

Im aufgespannten Zustand wird durch den Federmotor 27 die Rollobahn 13 gestrafft gehalten.

Fig. 2 lässt den Querschnitt der Trägerschiene 9 erkennen.

Die Trägerschiene 9 bildet einen ebenen Flansch 35, der an dem zum Fahrzeuginneren liegenden Ende von einer freien Kante 36 und parallel dazu von einer Nut 37 begrenzt ist. Die Nut 37 ist eine im Querschnitt rechteckige Nut. Sie wird von zwei Nutenflanken/-wänden 38 und 39 sowie einem Boden 41 begrenzt. In Richtung auf das Heckfenster 2 schließt sich an die Nut 37 eine schräg verlaufende Montagefläche 42 an, an der die Lagerbolzen 17 und 18 sowie der Getriebemotor 19 montiert sind.

Die Montagefläche 42 ist gleichzeitig eine der Außenwände einer Hohlkammer 43, die neben der Nut 37 ebenso wie diese mit konstantem Querschnitt über die Länge der Trägerschiene 9 durchläuft.

Die Trägerschiene 9 bildet eine glatte Unterseite 44, die von der Nutwand 38 bis zu der unteren freien Kante der Montagefläche 42 reicht.

Wie Fig. 2 ferner erkennen lässt, ist die Trägerschiene 9 ein rollgeformtes Teil, das aus einem ursprünglich ebenen Blechband hergestellt ist. Das Blechband wird von zwei parallel zueinander verlaufenden Kanten begrenzt, von denen die eine die bereits erwähnte Kante 36 ist sowie einer weiteren Kante 45, die sich im Bereich des Nutbodens 41 befindet.

Durch das Rollformen des Ausgangsmaterials entsteht der ebene Flansch 35, der an einer Kante 46 in den die Nutwand 38 bildenden Abschnitt übergeht. An einer unteren Eck- oder Biegekante 47 in einen ebenen Abschnitt übergeht, der den Boden 44 bildet. Dieser ebene Abschnitt endet an einer Biegekante 48, an der das Profil nach oben umgebogen ist um in die schräge Montagefläche 42 überzugehen, die bis zu einer Biegekante 49 reicht. Bei der Biegekante 49 läuft das Profil unter Bildung der Nutwand 39 senkrecht in Richtung auf den Boden 44. Neben dem Boden 44 geht das Profil an einer Biegekante 51 in einen ebenen Flansch 52 über, der flach auf der Oberseite des Bodens 44 aufliegt.

Der Flansch 42 endet an der Kante 45, die im Bereich zwischen den beiden Nutwänden 38 und 39 verläuft.

Der Nutboden 41 ist somit im Bereich des Flansches 52 doppellagig, während er im Bereich zwischen der Kante 45 und der Nutwand 38 einlagig ist.

Die Steifigkeit der Trägerschiene 9 wird erhöht, indem der Flansch 42 mit dem Böden 44 an der entsprechenden Stelle stoff- oder formschlüssig verbunden ist. Als stoffschlüssige Verbindung kommen in Frage Schweißen, und zwar in Gestalt von Laserschweißen längs der Kante 45, oder Punktschweißen längs einer Linie, die in Längsrichtung des Flansches 52 verläuft, oder durch Verkleben oder Löten.

Eine weitere Verbindungsmöglichkeit besteht darin, den Flansch 52 mit dem Boden 44 zu vernieten. Die Nietverbindung ist dem Fachmann bekannt und braucht deswegen im Einzelnen zeichnerisch nicht gezeigt zu werden.

Eine weitere Möglichkeit der formschlüssigen Verbindung zwischen dem Flansch 52 und dem Boden 44 besteht darin, die beiden Teile durch Toxen zu verbinden. Unter Toxen versteht der Fachmann eine Materialumformung, die dazu führt, das Material aus der einen Schicht durch Umformung in eine Öffnung der anderen Schicht eindringt. Da auch diese Verbindungstechnik dem Fachmann bekannt ist, braucht sie zeichnerisch nicht dargestellt zu werden. Es genügt insoweit die oben gegebene verbale Erläuterung.

Eine weitere Verbindungsart durch Toxen besteht darin, beispielsweise aus der oberen Lage, gebildet durch den Flansch 52 kurze Blechstreifen scharfkantig auszustanzen und entsprechende Öffnungen in dem Boden 44 einzudrücken. Zur Bildung der entsprechenden Öffnung wird auch aus dieser Schicht ein entsprechender Materialstreifen ausgestanzt. Mit anderen Worten, die durch die Ausstanzung der unteren Lage entstande Öffnung wird durch den Materialstreifen, der aus der oberen Lage ausgestanzt wurde, gefüllt. Beide Stanzungen geschehen gleichezeitig in einem Schritt.

Die Richtung dieser Materialstreifen können quer zu der Ausrichtung der Nut 37 liegen oder in deren Längsrichtung. Bevorzugt ist die Längsrichtung.

Der Vorteil des Toxens besteht darin, dass kein zusätzliches Fremdmaterial benötigt wird und die Überstände über die Unterseite des Bodens sich auf die Dicke des Materials beschränken.

Abweichend von der dargestellten Form gemäße Fig. 2 ist es auch möglich, im Anschluss an die Nut 37 das Material nach oben in Richtung auf die Kante 49 umzubiegen, so dass nach Ausbildung der schrägen Montagefläche 42 bzw. der Kammer 43 die freie Blechkante 45 nicht innerhalb der Nut sondern unterhalb des Bodens 44 im Bereich des Nutbodens 41 aufliegt.

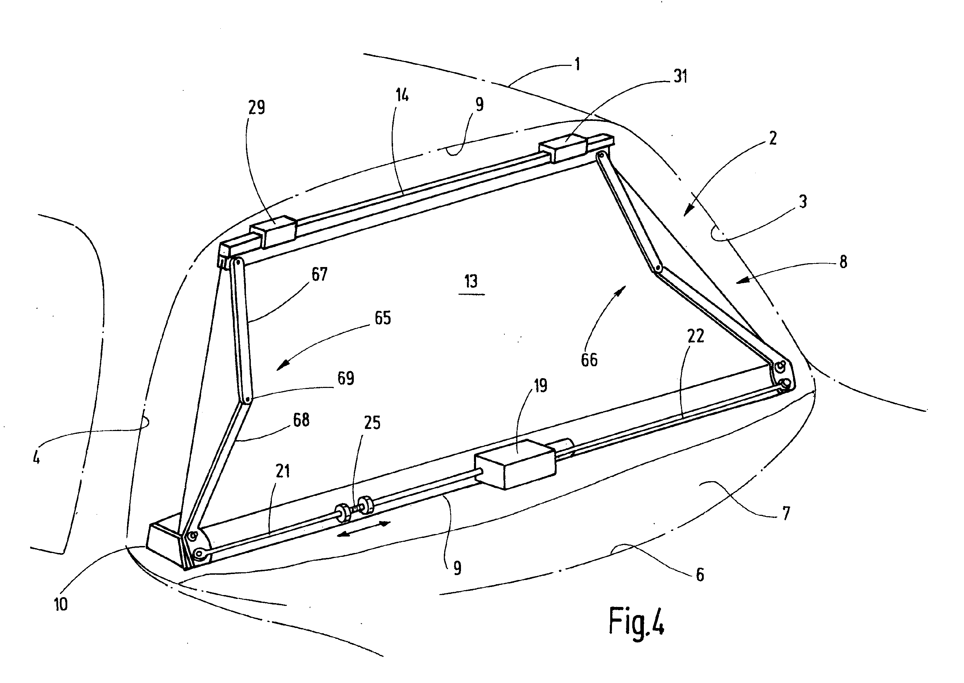

Fig. 4 zeigt in einer vergrößerten Darstellung anhand des Schwenkhebels 11 das Zusammenwirken der Schwenkhebel mit dem Zugstab 14.

Wie Fig. 4 erkennen lässt, enthält der Zugstab 14 eine hinterschnittene Nut 55, die sich nach unten in einem Nutenschlitz 56 öffnet. Die Nut 55 hat somit ein abgewinkeltes Profil. Neben dem Nutenschlitz 56 bildet der Zugstab 15 eine Leiste 57 mit einer Nut 58, in der die entsprechende Kante der Rollobahn 13 beispielsweise eingeklebt ist.

An dem oberen freien Ende des Arms 15 des Schwenkarms 11 sitzt ein Gleitstück 59, das an den Lichtraumprofil der hinterschnittenen Nut 55 angepasst ist. Es setzt sich aus einem Arm 61 und einem kurzen, zylindrischen Abschnitt 62 zusammen, der quer zu dem Arm 15 ausgerichtet ist.

Mit dem Arm 61 ragt das Gleitstück 59 durch den Schlitz 56 in die hinterschnittene Nut 55, während das Zylinderstück 52 rechtwinklig zum Arm 61 ausgerichtet in dem hinterschnittenen Teil läuft. Auf diese Weise kann, bezogen auf die senkrechte Richtung der Zeichenebene 4, eine Zug- und eine Druckkraft von dem Zugstab 19 auf den Schwenkhebel 11 bzw. umgekehrt, ausgeübt werden.

Die Nut 55 läuft über die gesamte Länge des Zugstabs 14 durch.

Beim Ausfahren der Rollobahn 13 laufen die beiden Schwenkhebel 11, 12, ausgehend von einer Stellung in der ihre freien Ende, etwa in der Mitte des Zugstabs 14 einander gegenüber liegen, in Richtung auf das jeweilige benachbarte Ende des Zugstabs 14.

Sollten die Arme 15 der beiden Schwenkhebel 11, 12 länger sein als die Hälfte der Wickelwelle 26 bzw. der Abstand zwischen den Lagerbolzen 17 und 18, können zwei ähnliche Nuten 55 in dem Zugstab 14 ausgebildet sein. Es läuft dann jeder der beiden Schwenkhebel 11, 12 in seiner eigenen Nut. Im eingefahrenen Zustand können sich somit die beiden Schenkhebel überlappen.

Der beschriebene Zugstab 14 besteht vorzugsweise aus einem Aluminiumstrangpressprofil. Dieses Strangpressprofil zeigt aufgrund seiner Herstellung in Längsrichtung des Profils verlaufende Riefen. Diese Riefen werden auf der Außenseite, die die Sichtseite des Zugstabs 14 darstellen, als unschön empfunden. Um sie zu beseitigen wird zumindest die Außenseite des Zugstabs durch Kugelstrahlen behandelt. Dadurch tritt eine Oberflächenverfestigung ein und die Riefen verschwinden.

Kugelstrahlen ist ein Bearbeitungsvorgang unter Verwendung kleiner Metallkugeln, die praktisch keine abrassive Wirkung haben.

Fig. 5 zeigt schließlich eine abgewandelte Ausführungsform, bei der anstelle der starren Schwenkhebel 11, 12 zwei Kniehebel 65, 66 vorgesehen sind. Jeder der beiden Kniehebel 65, 66 setzt sich aus einem oberen Arm 67 und einem unteren Arm 68 zusammen, die im Bereich eines Kniegelenkes 69 scharnierartig miteinander verbunden sind. Der untere Arm 68 ist ähnlich ausgebildet, wie der Schwenkhebel 11 bzw. 12 aus dem vorherigen Ausführungsbeispiel und entsprechend gelagert. Der obere Arm 67 des Kniehebels 65 ist an dem äußeren Ende des Zugstabs 14 scharnierartig angelenkt. Im Übrigen ist der Aufbau des Hebelrollos 8, wie zuvor erläutert.

Wenn aufgrund der Proportionen der Rollobahn 11 die Arme 68 so lang wären, dass im eingefalteten Zustand die Kniegelenke 69 aneinander anstoßen würden, sind die Scharnierbolzen 17 und 18 zwar achsparallel, jedoch gegenüber der Achse der Wickelwelle 26 geringfügig verkippt. Dadurch wird erreicht, dass im eingefalteten Zustand die beiden Kniehebel 65 und 66 ein stückweit einander überdeckend nebeneinander liegen.

Ein Hebelrollo weist Schwenk- oder Kniehebel auf, die dazu dienen, die Rollobahn im aufgespannten Zustand zu tragen. Diese Hebel sind an einer Trägerschiene schwenkbar gelagert, die durch Rollformen aus einem Blechband hergestellt ist. Aufgrund des Umformvorgangs entsteht an der Trägerschiene eine die Wickelwelle aufnehmende Nut sowie eine neben der Nut verlaufende Kammer. Die Trägerschiene erhält hierdurch die notwendige Biegesteifigkeit.

Außerdem ist der Zugstab, an dem die Rollobahn befestigt ist, durch Kugelstrahlen behandelt, um die beim Herstellungsprozess entstandenen Riefen zu beseitigen.

## Patentansprüche

1. Heckscheibenrollo (8)
mit einer Trägerschiene (9), die aus einem rollgeformten Blechband besteht, die im Querschnitt gesehen eine über die Länge durchlaufende Nut (37) sowie eine über die Länge durchlaufende Kammer (43) aufweist und die eine ebene Montagefläche (42) bildet, die neben der Nut (37) verläuft,
mit einer Wickelwelle (26), die in der Nut (37) drehbar gelagert ist,
mit einer Rollobahn (13), die mit einer Kante an der Wickelwelle (26) befestigt ist,
mit einem Zugstab (14), der an der von der Wickelwelle (26)
abliegenden Kante an der Rollobahn (13) befestigt ist, mit einer Hebelanordnung (11,12;65,66), die die Trägerschiene (9) mit dem Zugstab (14) verbindet, die an der Trägerschiene (9) anscharniert ist, die bezogen auf die im Betrieb normalerweise auftretenden Kräfte knick- und biegesteif ist und die dazu eingerichtet ist, den Zugstab (14) zumindest während der Ausfahrbewegung zu tragen, und
mit einer Antriebseinrichtung (19,27) zum Betätigen des Heckscheibenrollos (8).

2. Heckscheibenrollo nach Anspruch 1, **dadurch gekennzeichnet, dass** das Material für das Blechband Aluminium oder Stahl ist.

3. Heckscheibenrollo nach Anspruch 1, **dadurch gekennzeichnet, dass** die Nut (37) einen rechteckigen Querschnitt aufweist.

4. Heckscheibenrollo nach Anspruch 1, **dadurch gekennzeichnet, dass** die Nut (37) im Einbauzustand nach oben zeigt.

5. Heckscheibenrollo nach Anspruch 1, **dadurch gekennzeichnet, dass** die ebene Montagefläche (42) im Einbauzustand schräg verläuft.

6. Heckscheibenrollo nach Anspruch 1, **dadurch gekennzeichnet, dass** der Winkel der Montagefläche (42) gegenüber der Horizontalen an den Neigungswinkel der Heckscheibe angepasst ist, für den das Heckscheibenrollo (8) vorgesehen ist.

7. Heckscheibenrollo nach Anspruch 1, **dadurch gekennzeichnet, dass** sich das Querschnittsprofil der Trägerschiene (9) eine ebene Bodenfläche (44) aufweist.

8. Heckscheibenrollo nach Anspruch 1, **dadurch gekennzeichnet, dass** der Querschnitt der Kammer (43) dreieckförmig ist.

9. Vorrichtung nach Anspruch 1, **dadurch gekennzeichnet, dass** die Nut (37) einen ebenen Boden (41) bildet und das Querschnittsprofil der Trägerschienen (9) im Bereich des Bodens (41) zumindest abschnittsweise wenigstens zweilagig ist.

10. Heckscheibenrollo nach Anspruch 9, **dadurch gekennzeichnet, dass** eine freie Kante (45) des Blechbandes aus dem die Trägerschiene (9) rollgeformt ist, sich im Bereich des Bodens (41) der Nut (37) befindet.

11. Heckscheibenrollo nach Anspruch 9, **dadurch gekennzeichnet, dass** neben der freien Kante (45) das rollgeformte Profil einen Flansch (52) bildet, der auf dem Boden (41) der Nut (37) aufliegt, bzw einen Teil des Bodens (41) bildet.

12. Heckscheibenrollo nach Anspruch 11, **dadurch gekennzeichnet, dass** der Flansch (52) mit dem Boden (41) der Nut (37) stoff- oder formschlüssig verbunden ist.

13. Heckscheibenrollo nach Anspruch 12, **dadurch gekennzeichnet, dass** die stoffschlüssige Verbindung durch Kleben, Schweißen oder Löten erzeugt ist.

14. Heckscheibenrollo nach Anspruch 12, **dadurch gekennzeichnet, dass** die formschlüssige Verbindung zwischen dem Flansch (52) und dem Boden (41) der Nut (37) durch Toxen oder Nieten erzeugt ist.

15. Heckscheibenrollo nach Anspruch 1, **dadurch gekennzeichnet, dass** eine freie Kante (36) des Blechbandes die freie Kante (36) des seitlich neben der Nut (37) befindlichen Flansches (35) bildet.

16. Heckscheibenrollo nach Anspruch 1, **dadurch gekennzeichnet, dass** die Wickelwelle (26) rohrförmig ist.

17. Heckscheibenrollo nach Anspruch 1, **dadurch gekennzeichnet, dass** die Rollobahn (13) aus einer gelochten Kunststofffolie oder einem Gewirke besteht.

18. Heckscheibenrollo nach Anspruch 1, **dadurch gekennzeichnet, dass** die Hebelanordnung (11,12) zwei zweiarmige Hebel aufweist, die auf der Trägerschiene (9) im Bereich der Kammer (43) schwenkbar gelagert sind.

19. Heckscheibenrollo nach Anspruch 1, **dadurch gekennzeichnet, dass** die Hebelanordnung (65,55) zwei Kniehebel umfasst, die an der Trägerschiene (9) im Bereich der Kammer (43) anscharniert sind.

20. Heckscheibenrollo nach Anspruch 18, **dadurch gekennzeichnet, dass** der Hebel (11,12) mit dem Zugstab (14) gleitend verbunden ist.

21. Heckscheibenrollo nach Anspruch 19, **dadurch gekennzeichnet, dass** die Kniehebel (65,66) mit ihrem von der Trägerschiene (14) abliegenden Ende mit dem Zugstab (14) gelenkig verbunden sind.

22. Heckscheibenrollo nach Anspruch 1, **dadurch gekennzeichnet, dass** die Antriebseinrichtung (19,27) einen Federmotor (27) aufweist.

23. Heckscheibenrollo nach Anspruch 22, **dadurch gekennzeichnet, dass** der Federmotor (27) mit der Wickelwelle (26) verbunden ist, um die Wickelwelle (26) im Sinne des Aufwickelns der Rollobahn (13) auf die Wickelwelle (26) vorzuspannen.

24. Heckscheibenrollo nach Anspruch 1, **dadurch gekennzeichnet, dass** die Antriebseinrichtung (19,27) einen Getriebemotor (19) umfasst.

25. Heckscheibenrollo nach Anspruch 24, **dadurch gekennzeichnet, dass** der Getriebemotor (19) mit der Hebelanordnung (11,12;65,66) kinematisch gekuppelt ist.

26. Kraftfahrzeugscheibenrollo (8) mit einer Wickelwelle (26), die drehbar gelagert ist, mit einer Rollobahn (13), die mit einer Kante an der wickelwelle (26) befestigt ist, mit einem Zugstab (14), der an der von der Wickelwelle (26) abliegenden Kante an der Rollobahn (13) befestigt ist und der zumindest abschnittsweise aus einem Abschnitt eines Strangpressprofils gebildet ist, das wenigstens auf der Sichtseite mittels Kugelstrahlen bearbeitet ist, und
mit einer Antriebseinrichtung (19,27) zum Betätigen des Heckscheibenrollos (8).
